# EUROPÄISCHE PATENTSCHRIFT

(11) **EP 3 788 700 B1**
(45) Veröffentlichungstag und Bekanntmachung des Hinweises auf die Patenterteilung: **13.09.2023**
(21) Anmeldenummer: 19746004.1
(22) Anmeldetag: 10.07.2019
(51) Int. Cl.: H02K 1/02, H02K 1/30, H02K 15/02

(54) **MATERIALLAGE FÜR HOHE DREHZAHLEN**
MATERIAL LAYER FOR HIGH ROTATIONAL SPEEDS AND METHOD FOR PRODUCING
COUCHE DE MATÉRIAU POUR VITESSES DE ROTATION ÉLEVÉES ET PROCÉDÉ DE PRODUCTION

(30) Priorität: 13.07.2018 EP 18183453
(43) Veröffentlichungstag der Anmeldung: 10.03.2021
(73) Patentinhaber: Siemens Aktiengesellschaft, 80333 München (DE)
(72) Erfinder: VOLLMER, Rolf, 36129 Gersfeld (DE)
(74) Vertreter: Siemens Patent Attorneys
(86) Internationale Anmeldenummer: PCT/EP2019/068478
(87) Internationale Veröffentlichungsnummer: WO 2020/011821

(56) Entgegenhaltungen:
- WO-A1-2013/126546
- DE-A1-102009 042 607
- DE-A1-102015 206 100

## Beschreibung

Die Erfindung betrifft eine Materiallage sowie ein Verfahren zur Herstellung einer derartigen Materiallage.

Dynamoelektrische rotatorische Maschinen nutzen in ihren Blechpaketen Bleche aus weichmagnetischem Material, um von Permanentmagneten und/oder Elektromagneten erzeugte Magnetfelder zu verstärken. Die heutigen Bleche für Blechpakete werden aus gewalzten Großblechen gestanzt oder herausgeschnitten.

Nachteilig ist, dass Bleche, die gute magnetische Eigenschaften aufweisen, nur eine geringe Festigkeit aufweisen. Dadurch wird eine Maximaldrehzahl der Maschine begrenzt. Für einen Hersteller von dynamoelektrischen rotatorischen Maschinen ist daher stets abzuwägen, welche Eigenschaft für die entsprechende Maschine wichtiger ist.

Bleche, die sowohl gute magnetische Eigenschaften als auch eine hohe Festigkeit aufweisen, sind nicht verfügbar.

In der Patentschrift DE 10 2009 042 607 A1 wird ein Rotor beschrieben, welcher ein Blechpaket und Permanentmagnete aufweist, wobei das Blechpaket Magnettaschen aufweist, wobei zumindest ein Permanentmagnet in zumindest einer der Magnettaschen zumindest an zwei unterschiedlichen Materialien angrenzt, an ein erstes Material und an ein zweites Material.

Der Erfindung liegt die Aufgabe zugrunde, eine dynamoelektrische rotatorische Maschine zu verbessern und somit eine Maximaldrehzahl der dynamoelektrischen rotatorischen Maschine zu erhöhen.

Die Lösung der Aufgabe gelingt durch ein Herstellungsverfahren für eine Materiallage gemäß Anspruch 1, durch eine Materiallage gemäß Anspruch 5 sowie durch ein Materiallagengefüge gemäß Anspruch 14.

Die dynamoelektrische Maschine kann generatorisch als auch motorisch betrieben werden.

Die Materiallage hat vorteilhaft die bisherigen Funktionen eines Blechs in einem Rotor-Blechpaket inne und nimmt die Aufgaben eines Blechs wahr.

Vorteilhaft entspricht ein Umriss der Materiallage im Wesentlichen dem Umriss eines Blechs einer herkömmlichen dynamoelektrischen rotatorischen Maschine.

Ein Materiallagenfüge weist eine Mehrzahl an übereinander angeordneten Materiallagen auf.

Das Materiallagengefüge hat vorteilhaft die bisherigen Funktionen eines Rotor-Blechpakets inne und nimmt die Aufgaben eines Rotor-Blechpakets einer herkömmlichen dynamoelektrischen rotatorischen Maschine wahr.

Die Materiallage weist vorzugsweise eine im Wesentlichen kreisrunde im Wesentlichen am Lagenmittelpunkt angeordnete Materialaussparung auf. In anderen Worten: Die Materialaussparung ist vorzugsweise konzentrisch am Lagenmittelpunkt angeordnet.

Der erste Bereich gibt vorzugsweise an seinem radialen Ende eine Form eines Außenumfangs der Materiallage an. Der Außenumfang kann verschiedene Formen haben. Der Außenumfang kann z. B. rund sein oder eine Blumenform haben (siehe Figurenbeschreibung) .

Der zweite Bereich grenzt vorzugsweise an die am Lagenmittelpunkt angeordnete Materialaussparung an.

Der zweite Bereich grenzt an seinem Außenumfang vollständig an einen Innenumfang des ersten Bereichs an, der erste Bereich grenzt vollständig an seinem Innenumfang an den Außenumfang der des zweiten Bereichs an.

Die Materiallage ist mittels eines additiven Fertigungsverfahrens gefertigt.

Die Materiallage ist mittels eines Schablonendrucks gefertigt.

In einer vorteilhaften Ausführungsform der Erfindung weist das zweite Material eine Zugfestigkeit von wenigstens 800 MPa, vorzugsweise von wenigstens 1000 MPa, auf.

Eine maximale Zugfestigkeit des zweiten Materials liegt vorzugsweise bei 3800 MPa (beispielsweise Schnellarbeitsstahl).

Vorzugsweise weist das erste Material eine Zugfestigkeit zwischen 200 MPa und 500 MPa auf.

Eine Zugfestigkeit von wenigstens 1000 MPa weisen beispielsweise Werkzeugstähle auf.

Zugfestigkeiten bei Werkzeugstählen liegen vorzugsweise zwischen 1500 MPa und 4000 MPa.

In einer vorteilhaften Ausführungsform der Erfindung weist das erste Material eine erste magnetische Permeabilität, insbesondere µr > 50, auf und das zweite Material weist eine gegenüber der ersten magnetischen Permeabilität geringere zweite magnetische Permeabilität, insbesondere µr < 5, auf.

Die zweite magnetische Permeabilität ist vorzugsweise geringer als die erste Permeabilität. Eine hohe und geeignete Permeabilität liegt vorzugsweise zwischen 300 und 1000.

Dies bedeutet in anderen Worten: Der erste Bereich weist vorzugsweise eine hohe magnetische Permeabilität auf, seine Festigkeit ist jedoch nicht sehr hoch. Der zweite Bereich weist vorzugsweise eine nicht allzu hohe magnetische Permeabilität auf, jedoch ist seine Festigkeit sehr hoch.

In einer weiteren vorteilhaften Ausführungsform der Erfindung weist die Materiallage eine Lagendicke von 0,5 bis 500 µm auf.

Vorzugsweise weist die Materiallage eine Lagendicke von 10 bis 100 µm auf. Diese Ausführungsform gewährleistet eine stabile Materiallage.

In einer weiteren vorteilhaften Ausführungsform der Erfindung ist ein Übergang von dem ersten Bereich in den zweiten Bereich abrupt.

Der zweite Bereich ist vorzugsweise ringförmig.

In einer weiteren vorteilhaften Ausführungsform der Erfindung weist die Materiallage auf wenigstens einer Lagenseite, vorzugsweise auf beiden Lagenseiten, ein Isolationsmaterial auf.

In einer weiteren vorteilhaften Ausführungsform der Erfindung weisen die Materiallagen eine Lackierung auf.

In einer weiteren vorteilhaften Ausführungsform der Erfindung weisen die Materiallagen als Lackierung Backlack auf.

In einer weiteren vorteilhaften Ausführungsform der Erfindung ist das Isolationsmaterial die Lackierung.

Die Materiallage und das Isolationsmaterial und/oder die Lackierung sind vorzugsweise stoffschlüssig verbunden.

Da die Materiallagen nur eine sehr geringe Lagendicke aufweisen, werden Wirbelstromverluste deutlich reduziert. Denn ein Wirbelstrom kann sich nur innerhalb der Lagendicke der Materiallage ausbilden, wodurch bei derart dünnen Materiallagen die Wirbelstromstärke erheblich reduziert ist.

Die Isolation zwischen den einzelnen Materiallagen verhindert, dass sich die Wirbelströme zu großen, verlustreichen Wirbelströmen überlagern können.

Dies bringt unter anderem folgenden Vorteil mit sich: Innerhalb einer Wärmeklasse und bei gleicher Drehzahl erwärmt sich eine Maschine mit einem erfindungsgemäßen Materiallagengefüge-Rotor weniger als eine konventionelle Maschine mit einem Blechpaket-Rotor. In anderen Worten: Bei gleicher Drehzahl ist eine Maschine mit einem Materiallagengefüge-Rotor kühler als eine Maschine mit einem Blechpaket-Rotor.

Die Drehzahl kann somit erhöht werden, bis die maximal zulässige Temperatur der jeweiligen Wärmeklasse erreicht ist. Die bereitgestellte Leistung ist also höher. Gemäß P ~ M·n erhöht sich bei konstantem Drehmoment M die Leistung P proportional mit der Drehzahl n.

Die Maximaldrehzahl ist zudem aufgrund der hohen Festigkeit im zweiten Bereich nicht begrenzt.

Im Umkehrschluss bedeutet dies: Soll die Maschine eine bestimmte Leistung bereitstellen, kann bei einer Maschine mit Materiallagengefüge-Rotor eine geringere Wärmeklasse genutzt werden als bei einer Maschine mit Blechpaket-Rotor. Dadurch können Kosten gesenkt werden, insbesondere für Isolationsmaterialien und Kühlung.

Die erfindungsgemäßen Materiallagen sind vorzugsweise sehr dünn und können nicht - wie konventionelle Bleche - aus gewalzten Großblechen aus weichmagnetischem Material herausgeschnitten bzw. gestanzt werden. Bei einer konventionellen Fertigung von Großblechen durch Walzen können keine Großbleche gefertigt werden, die dünner als 100 µm sind.

Mittels der additiven Herstellung sind jedoch die bereits beschriebenen dünnen Materiallagen herstellbar.

Zudem entfällt bei der additiven Herstellung der beim Herausschneiden bzw. Stanzen der Bleche aus den Großblechen übliche unvermeidliche Abfall. Insbesondere fällt beim vorteilhaften Schablonendruck kein Abfall an.

In einer alternativen Ausführungsform zur Lackierung ist das Isolationsmaterial Keramik, vorzugsweise Oxidkeramik wegen eines hohen elektrischen Widerstands, beispielsweise Aluminiumoxid, Magnesiumoxid, Zirkoniumoxid und/oder Titandioxid. Siliciumcarbid, Siliciumnitrid, Borcarbid, Bornitrid und/oder Aluminiumnitrid sind auch möglich. Auch andere Materialien, wie z. B. Gläser oder Glaskeramik, sind denkbar.

In einer weiteren vorteilhaften Ausführungsform der Erfindung ist die Materiallage mit wenigstens einer weiteren Materiallage verfestigbar.

Die Materiallage ist in anderen Worten mit wenigstens einer weiteren Materiallage fest verbindbar und/oder zusammenfügbar.

Die vorteilhaft Backlack aufweisenden Materiallagen werden zur Bildung des Rotors übereinander angeordnet und vorzugsweise mittels Druck und Wärme miteinander verklebt. Dies wird auch Verbacken genannt. Durch Druck und Wärme wird der Backlack weich, klebt die Materiallagen aneinander und härtet aus. Dies hat gegenüber anderen Verbindungsmöglichkeiten wie Schweißen, Stanzpaketieren und Nieten den Vorteil, dass die Materiallagen keine werkstoffschädigenden Kontaktstellen aufweisen. Zudem wird ein Magnetfluss nicht gestört und es entstehen keine Materialspannungen und Materialverformungen.

Der vorteilhaft aufgebrachte Backlack ermöglicht eine hohe Festigkeit wenigstens zweier gegenseitig verfestigter Materiallagen, da die Materiallagen flächig verbunden sind. Dies reduziert Vibrationen und Geräusche.

In einer weiteren vorteilhaften Ausführungsform der Erfindung weist die Materiallage wenigstens einen dritten Bereich auf, wobei der dritte Bereich permanentmagnetisches Material aufweist, wobei das permanentmagnetische Material stoffschlüssig mit dem ersten Material und/oder mit dem zweiten Material verbunden ist.

Vorzugsweise weist die Materiallage mehrere dritte Bereiche auf (wenigstens zwei). Vorzugsweise ist der wenigstens eine dritte Bereich vom ersten Bereich umschlossen.

Vorzugsweise wird das permanentmagnetische Material aufmagnetisiert.

In einer weiteren vorteilhaften Ausführungsform der Erfindung weist die Materiallage wenigstens eine Materialaussparung zur Einbringung von permanentmagnetischem Material auf.

Die wenigstens eine Materialaussparung ist vorzugsweise näher am Außenumfang der Materiallage angeordnet als am Innenumfang.

Vorzugsweise weist die Materiallage wenigstens zwei, vorzugsweise mehrere, Materialaussparungen zur Einbringung von permanentmagnetischem Material auf. Das permanentmagnetische Material dient vorzugsweise einer Ausbildung von Polen.

Permanentmagnetisches Material ist beispielsweise Neodym-Eisen-Bor, Samarium-Cobalt, Alnico oder hartmagnetische Ferrite.

Ist eine Mehrzahl an Materiallagen übereinander angeordnet, bilden die Materialaussparungen im Materiallagengefüge Taschen (in anderen Worten: Öffnungen). In diese Taschen können Permanentmagnete eingebracht werden. Auf diese Weise verfügt das Materiallagengefüge über innenliegende Permanentmagnete.

Es ist jedoch auch ein Materiallagengefüge mit außenliegenden Permanentmagneten möglich.

Die Erfindung dient einer Erhöhung der Drehzahl um einen Faktor 1,5 bis 10.

Die Erfindung betrifft ein Materiallagengefüge für einen Rotor einer dynamoelektrischen rotatorischen Maschine aufweisend eine Mehrzahl übereinander angeordneten Materiallagen.

In einer vorteilhaften Ausführungsform der Erfindung ist die Mehrzahl an Materiallagen in Richtung einer Rotationsachse übereinander angeordnet.

In einer weiteren vorteilhaften Ausführungsform der Erfindung weist das Materiallagengefüge eine zylindrische Materialaussparung entlang der Rotationsachse zur Anbindung an eine Welle auf.

In einer weiteren vorteilhaften Ausführungsform der Erfindung ist die Mehrzahl an Materiallagen derart angeordnet, dass die dritten Bereiche aufweisend permanentmagnetisches Material Permanentmagnete in bezüglich zur Rotationsachse gestaffelter oder geschrägter oder achsparalleler Ausführung bilden.

Dies reduziert ein Nutrastmoment und eine Drehmomentwelligkeit.

Die Erfindung betrifft auch ein Verfahren zur Herstellung einer Materiallage, wobei die Materiallage wenigstens einen ersten Bereich, aufweisend ein erstes Material, und wenigstens einen zweiten Bereich, aufweisend ein zweites Material, umfasst, mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Bereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Bereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung.

Die Suspension wird vorzugsweise mit einer Rakel aufgebracht.

In einer vorteilhaften Ausführungsform der Erfindung wird das Bindemittel aus dem ersten Grünkörper und/oder dem zweiten Grünkörper, insbesondere mittels Entbinderung, vor dem Zusammenfügen und/oder nach dem Zusammenfügen ausgetrieben.

Die erste bzw. zweite Schablone ist vorzugsweise eine Vorlage zum Übertragen gewünschter Formen und/oder Umrisse und/oder Muster und/oder Aussparungen etc. Die erste bzw. zweite Schablone kann beliebig oft verwendet werden.

Mittels der ersten bzw. zweiten Schablone kann genau die Form der Materiallage gebildet werden, die gewünscht ist. So entsteht kein Abfall. Es können auch drei oder mehr Schablonen für eine Materiallage verwendet werden.

Die Materiallage ist vorzugsweise durch die Erwärmung und/oder Verdichtung, insbesondere mittels Sinterung, der beiden Grünkörper einstückig.

Sind drei oder mehr Bereiche gewünscht, müssen entsprechend mehr Grünkörper geschaffen und zusammengefügt werden.

In einer weiteren vorteilhaften Ausführungsform der Erfindung umfassen die Festteilchen Metallteilchen.

Die Festteilchen liegen vorzugsweise als Pulver vor. Ein Festteilchen umfasst vorzugsweise wenigstens ein ferromagnetisches Material, insbesondere weichmagnetisches Material.

Beispielsweise ist das weichmagnetische Material Eisen, Nickel, Kobalt und/oder deren Legierungen Es sind jedoch auch andere magnetisch leitfähige Materialien denkbar.

Ein Festteilchen weist vorzugsweise im Wesentlichen einen Durchmesser zwischen 0,1 und 50 µm, insbesondere zwischen 0,5 und 10 pm, auf.

Je geringer der Durchmesser der Festteilchen ist, desto dünnere Materiallagen können hergestellt werden. Beispielsweise kann mittels einer Suspension, welche Festteilchen mit einem Durchmesser von 0,5 µm aufweist, eine 0,5 µm dünne Materiallage hergestellt werden.

Das Pulver kann Festteilchen ausschließlich eines Materials umfassen oder eine Pulvermischung, umfassend wenigstens zwei unterschiedliche Materialien, sein.

In einer weiteren vorteilhaften Ausführungsform der Erfindung umfassen die Festteilchen der ersten Suspension Teilchen mit einer ersten Permeabilität und einer ersten Festigkeit, wobei die Festteilchen der zweiten Suspension Teilchen mit einer gegenüber der ersten Permeabilität geringeren zweiten Permeabilität und einer gegenüber der ersten Festigkeit höheren Festigkeit umfassen.

In einer weiteren vorteilhaften Ausführungsform der Erfindung umfassen die Festteilchen einer dritten Suspension permanentmagnetische Teilchen.

In einer weiteren vorteilhaften Ausführungsform der Erfindung wird auf die Materiallage auf wenigstens einer Lagenseite, vorzugsweise auf beiden Lagenseiten, ein Isolationsmaterial aufgebracht.

In einer weiteren vorteilhaften Ausführungsform der Erfindung wird auf die Materiallage ein Lack, insbesondere Backlack, aufgebracht.

In einer weiteren vorteilhaften Ausführungsform der Erfindung ist wenigstens eine Suspension strukturviskos.

Dies hat den Vorteil, dass die Suspension während des Auftragens auf die Grundfläche zur Erzeugung des Grünkörpers, vorzugsweise mit der Rakel, weniger viskos ist und die gewünschte Form durch die Schablone optimal übertragen werden kann. Ist das Auftragen beendet, behält der Grünkörper die gewünschte Form bei.

Die Erfindung betrifft ein Verfahren zur Herstellung eines Materiallagengefüges für einen Rotor einer dynamoelektrischen rotatorischen Maschine mit folgenden Schritten:
- Zusammenfügen einer Mehrzahl an Materiallagen,
- Verbacken der Materiallagen zur gegenseitigen Verfestigung der Materiallagen.

Das Zusammenfügen bzw. eine Übereinanderanordnung einer Mehrzahl an Materiallagen erfolgt vorzugsweise in Richtung der Rotationsachse. Jedoch können die Materiallagen auch parallel zur Rotationsachse zusammengefügt werden.

Die Anbindung des Materiallagengefüges an die Welle zur Bildung des Rotors erfolgt vorzugsweise mit einer Pressung. Die Pressung ist vorzugsweise eine mechanische Pressung. Das Materiallagengefüge und die Welle weisen hierbei vorzugsweise eine im Wesentlichen gleiche Temperatur auf.

Alternativ unterscheiden sich die Temperaturen des Materiallagengefüges und der Welle, z. B. kann die Welle vor der Pressung abgekühlt werden und/oder die Materiallagen erwärmt werden.

Die Pressung muss einerseits so hoch sein, dass die Materiallagen bei Maximaldrehzahl nicht von der Welle abheben. Andererseits darf eine maximal zulässige plastische Verformung, insbesondere der Materiallagen, nicht überschritten werden.

Die beschriebenen Materiallagen weisen eine hohe Festigkeit im zweiten Bereich, der vorzugsweise an die Welle angrenzt, auf, wodurch eine hohe Pressung und somit eine hohe Maximaldrehzahl möglich sind. Überdies ist die hohe Maximaldrehzahl durch die guten magnetischen Eigenschaften im ersten Bereich erreichbar.

Die Erfindung kann besonders gut für Maschinen mit Magnetlagern verwendet werden. Diese sind für hohe Drehzahlen besonders gut geeignet.

Mögliche Anwendungsgebiete der Erfindung sind beispielsweise Spindelmotoren, insbesondere High-Speed-Spindelmotoren, Turbinenantriebe oder Zentrifugenantriebe. Jedoch kann die Erfindung auch in anderen Bereichen eingesetzt werden.

Im Folgenden wird die Erfindung anhand der in den Figuren dargestellten Ausführungsbeispiele näher beschrieben und erläutert. Es zeigen:
- FIG 1: eine erfindungsgemäße Materiallage,
- FIG 2: eine Ausführungsmöglichkeit der Materiallage mit Aussparungen für innenliegende Permanentmagnete,
- FIG 3: eine Ausführungsmöglichkeit der Materiallage mit Isolationsmaterial,
- FIG 4: eine Ausführungsmöglichkeit der Materiallage mit permanentmagnetischem Material,
- FIG 5: eine Ausführungsmöglichkeit eines Materiallagengefüges,
- FIG 6: ein Verfahren zur Herstellung einer Materiallage,
- FIG 7: ein Verfahren zur Herstellung eines Materiallagengefüges und
- FIG 8: die dynamoelektrische rotatorische Maschine 21.

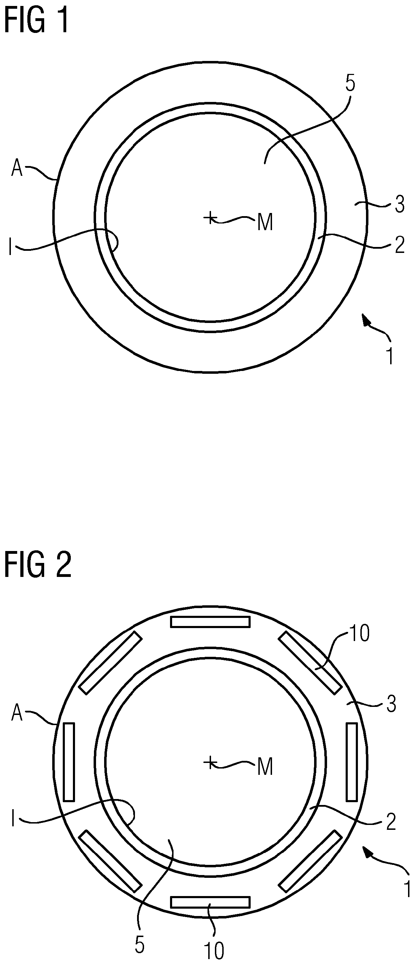

FIG 1 zeigt eine erfindungsgemäße Materiallage 1.

Die Materiallage 1 weist eine im Wesentlichen am Lagenmittelpunkt angeordnete Materialaussparung 5 auf. Die Materiallage 1 weist einen ersten Bereich 3 auf. Der erste Bereich 3 weist ein erstes Material mit einer ersten Festigkeit auf.

Das erste Material ist beispielsweise Reineisen, insbesondere Reineisen mit < 0,01 % Kohlenstoff.

Die Materiallage 1 weist in der Figur einen ringförmigen, konzentrisch zum Lagenmittelpunkt M angeordneten zweiten Bereich 2 auf. Der zweite Bereich 2 weist ein zweites Material mit einer gegenüber der ersten Festigkeit höheren zweiten Festigkeit auf. Ein Außenumfang des zweiten Bereichs grenzt in der Figur an einen Innenumfang des ersten Bereichs an.

Das zweite Material ist beispielsweise ein Stahl, insbesondere mit der Werkstoffnummer 1.8161.

Das erste Material und das zweite Material sind stoffschlüssig verbunden.

Auf diese Weise sind in der Figur auch der erste Bereich 3 und der zweite Bereich 2 stoffschlüssig verbunden.

Die Figur zeigt, dass der erste Bereich 3 konzentrisch zum Lagenmittelpunkt M angeordnet ist. Ein Umriss eines Außenumfangs A der Materiallage 1 ist in der Figur rund.

Es ist jedoch auch möglich, dass der Umriss des Außenumfangs A der Materiallage 1 nicht rund ist.

Beispielsweise weist eine Materiallage für einen Blümchenläufer einen blumenähnlichen Außenumfang auf. Der Blümchenläufer ist ein Rotor, insbesondere für permanenterregte Synchronmaschinen. Die Permanentmagnete sind als Magnete konstanter Höhe mit am Rand vergrößertem Luftspalt ausgeführt. Ein Innenradius der vorzugsweise als Schalenmagnete ausgeführten Permanentmagnete ist hierbei vorzugsweise gleich einem Außenradius. Der Blümchenläufer erreicht eine Reduzierung einer Drehmomentwelligkeit und eines Nutrastmoments.

Auch andere Umrisse sind möglich.

Der zweite Bereich 2 bestimmt in der Figur einen Innenumfang I der Materiallage 1. Der zweite Bereich 2 grenzt in der Figur an die am Lagenmittelpunkt M angeordnete Materialaussparung 5 an.

Die beschriebenen Bezugszeichen sind auch für die folgenden Figuren gültig, sofern sie in den Ausführungsbeispielen vorhanden sind, und werden aus Übersichtsgründen nicht erneut erläutert.

FIG 2 zeigt eine Ausführungsmöglichkeit der Materiallage 1 mit Aussparungen 10 für innenliegende Permanentmagnete.

Ist eine Mehrzahl an Materiallagen 1 übereinander angeordnet, bilden die Aussparungen 10 im Materiallagengefüge Taschen (in anderen Worten: Öffnungen). In diese Taschen können Permanentmagnete eingebracht werden.

Die Aussparungen 10 weisen jeweils einen Umriss auf, welcher an einen Umriss, insbesondere nachträglich, einbringbarer Permanentmagnete angepasst ist.

Vorzugsweise ist der Umriss derart angepasst, dass eine Verbindung von Materiallage 1 bzw. Materiallagengefüge und Permanentmagnet per Kraftschluss gelingt.

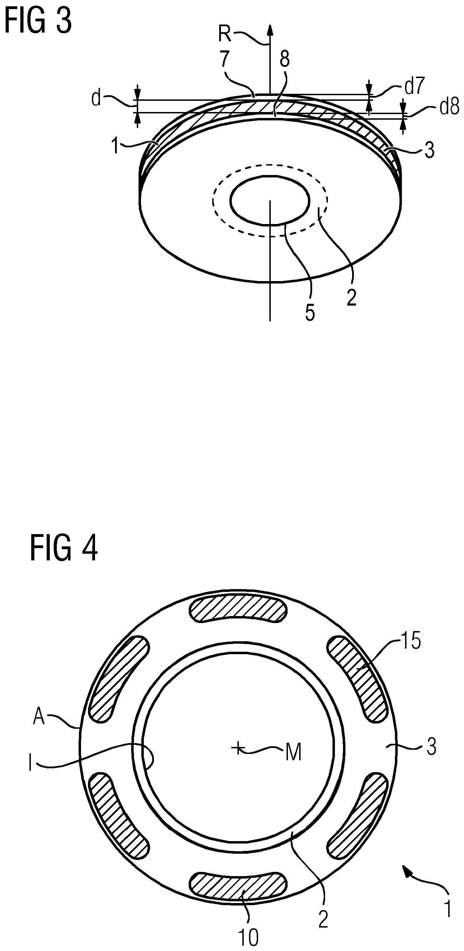

FIG 3 zeigt eine Ausführungsmöglichkeit der Materiallage 1 mit Isolationsmaterial.

Die Materiallage 1 weist eine Lagendicke d auf. Vorzugsweise weist jede Materiallage 1 auf wenigstens einer Lagenseite ein Isolationsmaterial auf. Die Figur zeigt eine Ausführung, wonach jede Materiallage 1 auf beiden Lagenseiten ein Isolationsmaterial 7, 8 aufweist. Das Isolationsmaterial ist in der Figur Lack, insbesondere Backlack. Dies entspricht einer bevorzugten Ausführung.

Vorzugsweise sind das Isolationsmaterial und die Materiallage stoffschlüssig verbunden. Die Materiallage 1 ist vorzugsweise einstückig.

Die Materiallage 1 weist auf einer oberen Lagenseite Lack 7 mit einer Isolationsdicke d7 und auf einer unteren Lagenseite Lack 8 mit einer Isolationsdicke d8 auf.

Es ist auch möglich, dass die Materiallage 1 ein andersartiges Isolationsmaterial und zusätzlich Lack aufweist. Es ist auch möglich, dass die Materiallage 1 ein andersartiges Isolationsmaterial auf einer Lagenseite und Lack auf der anderen Lagenseite aufweist. Es ist auch möglich, dass die Materiallage 1 eine Mischform aus andersartigem Isolationsmaterial und Lack aufweist.

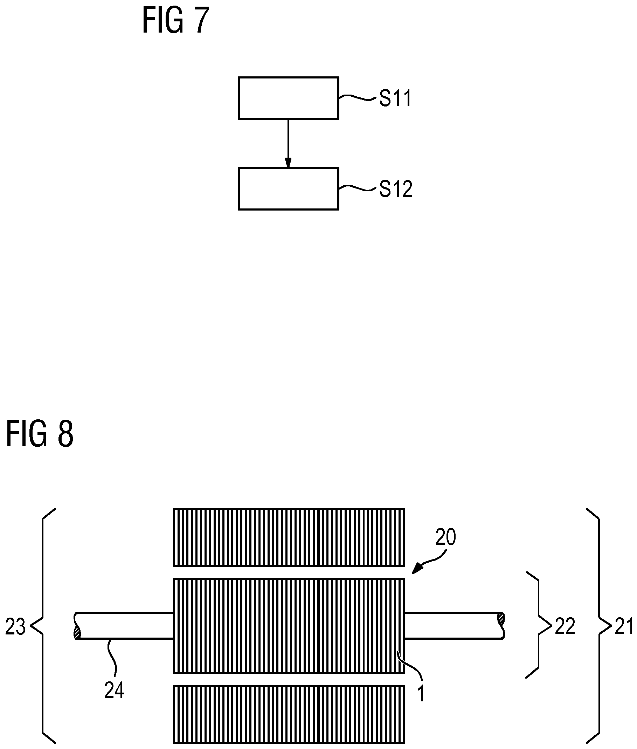

Die Figur zeigt zudem eine mittig angeordnete Materialaussparung 5 (zur späteren Anbindung an eine Welle, siehe FIG 8). Durch einen Mittelpunkt der Materialaussparung 5 führt eine Rotationsachse R.

FIG 4 zeigt eine Ausführungsmöglichkeit der Materiallage 1 mit permanentmagnetischem Material 15.

Die Materiallage 1 weist wenigstens einen dritten Bereich 15 auf. Der dritte Bereich weist permanentmagnetisches Material auf. Das permanentmagnetische Material ist in der Figur stoffschlüssig mit dem ersten Material verbunden.

Es ist auch möglich, dass das permanentmagnetische Material mit dem zweiten Material verbunden ist oder mit dem zweiten und dem ersten Material verbunden ist.

Die Figur zeigt sechs dritte Bereiche 15, die einer Ausbildung von Polen dienen. Die dritten Bereiche 15 fungieren hierbei als innenliegende Permanentmagnete.

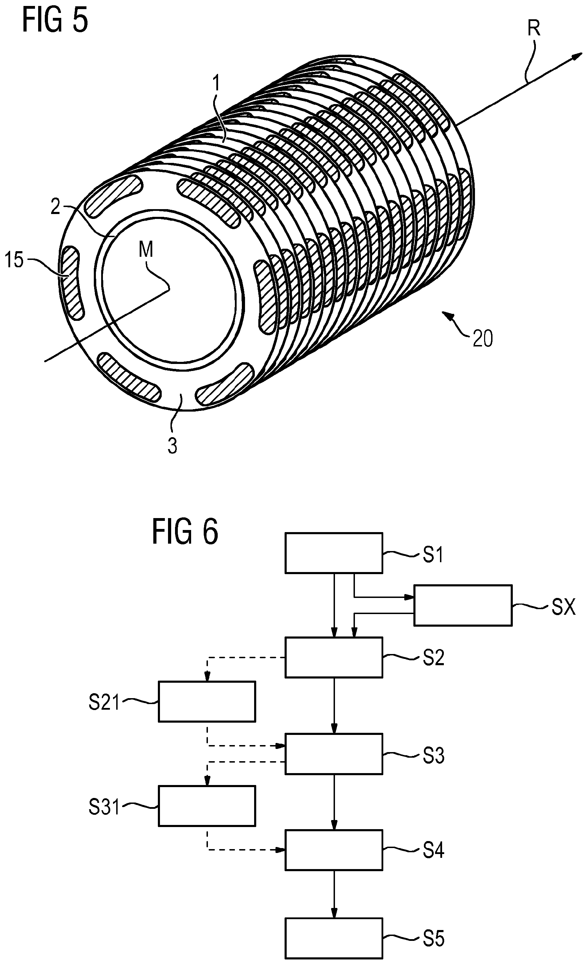

FIG 5 zeigt eine Ausführungsmöglichkeit eines Materiallagengefüges 20.

Das Materiallagengefüge 20 weist eine Mehrzahl an Materiallagen 1 der in FIG 4 beschriebenen Ausführung auf. Die Materiallagen 1 sind in der Figur entlang der Rotationsachse R angeordnet.

Das Materiallagengefüge 20 ist vorzugsweise als ein Rotorstapel ausgebildet. Der Rotorstapel ist hierbei ein eine Mehrzahl an im Wesentlichen ebenen Materiallagen umfassender Stapel, wobei die Materiallagen sich berühren. Vorzugsweise sind die Materiallagen miteinander verfestigt.

Das Materiallagengefüge 20 ist jedoch auch mit einer Mehrzahl an Materiallagen der in FIG 1, FIG 2 und/oder FIG 3 beschriebenen Ausführungen möglich.

Die Mehrzahl an Materiallagen 1 ist in der Figur derart angeordnet, dass die dritten Bereiche 15 eine geschrägte Permanentmagnetanordnung bilden. Dies reduziert die Drehmomentwelligkeit und das Nutrastmoment einer dynamoelektrischen rotatorischen Maschine, welche über ein derartiges Materiallagengefüge 20 verfügt.

Es ist auch eine gestaffelte oder achsparallele Permanentmagnetanordnung möglich.

FIG 6 zeigt ein Verfahren zur Herstellung einer Materiallage.

Die Materiallage weist wenigstens einen ersten Bereich, aufweisend ein erstes Material, und wenigstens einen zweiten Bereich, aufweisend ein zweites Material auf.

In einem Verfahrensschritt S1 wird daher eine erste Suspension, aufweisend wenigstens ein Bindemittel und Festteilchen, durch eine erste Schablone auf eine Grundfläche zum Erhalt eines ersten Grünkörpers aufgebracht. Der erste Bereich wird von der ersten Schablone abgebildet (z. B. der bereits beschriebene erste Bereich 3).

Aufgebracht bedeutet hierbei vorzugsweise: Auf die Grundfläche wird die Suspension mit einer Rakel aufgebracht.

In einem Verfahrensschritt S2 folgt ein Aufbringen einer zweiten Suspension, aufweisend wenigstens ein Bindemittel und Festteilchen, durch eine zweite Schablone auf eine Grundfläche zum Erhalt eines zweiten Grünkörpers. Der zweite Bereich wird von der zweiten Schablone abgebildet.

Ein Verfahrensschritt SX zeigt, dass diese Verfahrensschritte so oft erfolgen, bis eine gewünschte Anzahl an Grünkörpern und somit Bereichen (z. B. der bereits beschriebene dritte Bereich 15 und/oder weitere mögliche, aber nicht beschriebene Bereiche) vorliegt.

Es können verschiedene Vorgehensweisen verfolgt werden: Das jeweilige Bindemittel aus dem ersten Grünkörper und/oder dem zweiten (und/oder weiteren) Grünkörper kann vor dem Zusammenfügen in einem Verfahrensschritt S3 (siehe Verfahrensschritt S21) des ersten Grünkörpers und des zweiten Grünkörpers (und/oder weiteren) und/oder nach dem Zusammenfügen (siehe Verfahrensschritt S31) ausgetrieben werden.

Das Austreiben des Bindemittels wird vorzugsweise mittels Entbinderung bewerkstelligt.

In einem Verfahrensschritt S4 wird ein dauerhafter, stoffschlüssiger Zusammenhalt der beiden (oder mehrerer) Grünkörper miteinander und der Festteilchen im jeweiligen Grünkörper durch Erwärmung und/oder mittels Verdichtung, insbesondere mittels Sinterung, geschaffen.

In einem Verfahrensschritt S5 wird auf die Materiallage auf wenigstens einer Lagenseite ein Isolationsmaterial aufgebracht. Das Isolationsmaterial ist vorzugsweise ein Lack, insbesondere Backlack.

Aufgebracht bedeutet hierbei vorzugsweise: Auf die Lagenseite wird Isolationsmaterial mit einer Rakel aufgebracht oder die Lagenseite wird mit einem Streichwerkzeug bestrichen oder die Lagenseite wird in ein das Isolationsmaterial beinhaltendes Gefäß eingetaucht.

Die Schablonen können auf einfache und kostengünstige Weise variiert werden. Bei geänderten Anforderungen an die Materiallage, z. B. wenn der zweite Bereich in Radialrichtung breiter werden soll, können die Schablonen modifiziert werden. Es entstehen kaum Werkzeugkosten.

FIG 7 zeigt ein Verfahren zur Herstellung eines Materiallagengefüges.

In einem Verfahrensschritt S11 wird eine Mehrzahl an Materiallagen (wenigstens zwei) zusammengefügt. Die Herstellung der Materiallagen wurde in FIG 6 beschrieben. Die vorteilhaft Backlack aufweisenden Materiallagen werden zur Bildung des Materiallagengefüges übereinander angeordnet.

In einem Verfahrensschritt S12 werden die Materiallagen zur gegenseitigen Verfestigung miteinander verbacken.

FIG 8 zeigt die dynamoelektrische rotatorische Maschine 21. Die Maschine 21 weist einen Stator 23 auf sowie einen Rotor 22. Der Rotor 22 ist an eine Welle 24 angebunden. Der Rotor 22 weist ein Materiallagengefüge 20 auf.

Beispielsweise weist die Materiallage 1 für den Rotor 22 einen festen Bereich mit 1.8161 und einen weichen Bereich mit Reineisen auf.

Ein beispielhafter Motor mit einer Motormasse von ca. 60 kg und einem Wirkungsgrad von > 95 % weist beispielsweise folgende Daten auf: Rotordurchmesser von ca. 100 mm, Aktivlänge von ca. 250 mm, Leistung von ca. 300 kW, Drehzahl von ca. 40000 1/min, Drehmoment von ca. 72 Nm.

## Patentansprüche

1. Verfahren zur Herstellung einer Materiallage (1) für einen Rotor (22) einer dynamoelektrischen rotatorischen Maschine (21) mit einer Rotationsrichtung um eine in einem Lagenmittelpunkt (M) der Materiallage (1) angeordnete Rotationsachse (R), wobei die Materiallage (1) eine im Wesentlichen am Lagenmittelpunkt (M) angeordnete Materialaussparung (5) aufweist, wobei die Materiallage (1) einen ersten Bereich (3) aufweist, wobei der erste Bereich (3) ein erstes Material mit einer ersten Festigkeit aufweist, wobei die Materiallage (1) einen im Wesentlichen ringförmigen, konzentrisch zum Lagenmittelpunkt angeordneten zweiten Bereich (2) aufweist, wobei der zweite Bereich (2) ein zweites Material mit einer gegenüber der ersten Festigkeit höheren zweiten Festigkeit aufweist, wobei das erste Material und das zweite Material stoffschlüssig verbunden sind, wobei ein Außenumfang des zweiten Bereichs (2) vollständig an einen Innenumfang des ersten Bereichs (3) angrenzt,
mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Bereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Bereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung.

2. Verfahren nach Anspruch 1, wobei die Festteilchen Metallteilchen umfassen.

3. Verfahren nach einem der Ansprüche 1 oder 2, wobei die Festteilchen der ersten Suspension Teilchen mit einer ersten Permeabilität und einer ersten Festigkeit umfassen, wobei die Festteilchen der zweiten Suspension Teilchen mit einer gegenüber der ersten Permeabilität geringeren zweiten Permeabilität und einer gegenüber der ersten Festigkeit höheren Festigkeit umfassen.

4. Verfahren nach einem der Ansprüche 1 bis 3, wobei auf die Materiallage (1) auf wenigstens einer Lagenseite, vorzugsweise auf beiden Lagenseiten, ein Isolationsmaterial (7, 8) aufgebracht wird.

5. Materiallage (1), hergestellt nach einem der Ansprüche 1 bis 4, für einen Rotor (22) einer dynamoelektrischen rotatorischen Maschine (21) mit einer Rotationsrichtung um eine in einem Lagenmittelpunkt (M) der Materiallage (1) angeordnete Rotationsachse (R), wobei die Materiallage (1) eine im Wesentlichen am Lagenmittelpunkt (M) angeordnete Materialaussparung (5) aufweist, wobei die Materiallage (1) einen ersten Bereich (3) aufweist, wobei der erste Bereich (3) ein erstes Material mit einer ersten Festigkeit aufweist, wobei die Materiallage (1) einen im Wesentlichen ringförmigen, konzentrisch zum Lagenmittelpunkt angeordneten zweiten Bereich (2) aufweist, wobei der zweite Bereich (2) ein zweites Material mit einer gegenüber der ersten Festigkeit höheren zweiten Festigkeit aufweist, wobei das erste Material und das zweite Material stoffschlüssig verbunden sind,
wobei ein Außenumfang des zweiten Bereichs (2) vollständig an einen Innenumfang des ersten Bereichs (3) angrenzt.

6. Materiallage (1) nach Anspruch 5, wobei das zweite Material eine Zugfestigkeit von wenigstens 800 MPa, vorzugsweise von wenigstens 1000 MPa, aufweist.

7. Materiallage (1) nach einem der Ansprüche 5 oder 6, wobei das erste Material eine erste magnetische Permeabilität, insbesondere µr > 50, aufweist und das zweite Material eine gegenüber der ersten magnetischen Permeabilität geringere zweite magnetische Permeabilität, insbesondere µr < 5, aufweist.

8. Materiallage (1) nach einem der Ansprüche 5 bis 7 mit einer Lagendicke (d) von 0,5 bis 500 µm.

9. Materiallage (1) nach einem der Ansprüche 5 bis 8, wobei ein Übergang von dem ersten Bereich (3) in den zweiten Bereich (2) abrupt ist.

10. Materiallage (1) nach Anspruch 5, wobei die Materiallage (1) auf wenigstens einer Lagenseite, vorzugsweise auf beiden Lagenseiten, ein Isolationsmaterial (7, 8) aufweist.

11. Materiallage (1) nach einem der Ansprüche 5 bis 10, wobei die Materiallage (1) mit wenigstens einer weiteren Materiallage (1) verfestigbar ist.

12. Materiallage (1) nach einem der Ansprüche 5 bis 11, wobei die Materiallage (1) wenigstens einen dritten Bereich (15) aufweist, wobei der dritte Bereich (15) permanentmagnetisches Material aufweist, wobei das permanentmagnetische Material stoffschlüssig mit dem ersten Material und/oder mit dem zweiten Material verbunden ist.

13. Materiallage (1) nach einem der Ansprüche 5 bis 12, wobei die Materiallage (1) wenigstens eine Materialaussparung (10) zur Einbringung von permanentmagnetischem Material aufweist.

14. Materiallagengefüge (20) für einen Rotor (22) einer dynamoelektrischen rotatorischen Maschine (21), aufweisend eine Mehrzahl an übereinander angeordneten Materiallagen (1) nach einem der Ansprüche 5 bis 13, wobei das Materiallagengefüge (20) eine zylindrische Materialaussparung entlang der Rotationsachse zur Anbindung an eine Welle (24) aufweist.

15. Materiallagengefüge nach Anspruch 14, wobei die Mehrzahl an Materiallagen (1) derart angeordnet ist, dass die dritten Bereiche aufweisend permanentmagnetisches Material Permanentmagnete in bezüglich zur Rotationsachse gestaffelter oder geschrägter oder achsparalleler Ausführung bilden.

## Claims

1. Method for producing a material layer (1) for a rotor (22) of a dynamoelectric rotary machine (21) with a rotational direction about a rotational axis (R) arranged in a layer centre (M) of the material layer (1), wherein the material layer (1) has a material recess (5) arranged substantially at the layer centre (M), wherein the material layer (1) has a first region (3), wherein the first region (3) has a first material with a first degree of strength, wherein the material layer (1) has a substantially annular second region (2) arranged concentrically to the layer centre, wherein the second region (2) has a second material with a second degree of strength higher than the first degree of strength, wherein the first material and the second material are connected with a material bond, wherein an outer circumference of the second region (2) fully adjoins an inner circumference of the first region (3), with the following steps:
- applying a first suspension having at least one binding agent and solid particles through a first screen onto a base in order to obtain a first green body, wherein the first region is mapped from the first screen,
- applying a second suspension having at least one binding agent and solid particles through a second screen onto a base in order to obtain a second green body, wherein the second region is mapped by the second screen,
- joining the first green body and the second green body,
- creating a permanent material bond of the two green bodies and the solid particles by heating and/or by means of compression, in particular by means of sintering.

2. Method according to claim 1, wherein the solid particles comprise metal particles.

3. Method according to one of claims 1 or 2, wherein the solid particles of the first suspension comprise particles with a first permeability and a first degree of strength, wherein the solid particles of the second suspension comprise particles with a second permeability lower than the first permeability and a degree of strength higher than the first degree of strength.

4. Method according to one of claims 1 to 3, wherein an insulation material (7, 8) is applied to the material layer (1) on at least one layer side, preferably on both layer sides.

5. Material layer (1) produced according to one of claims 1 to 4 for a rotor (22) of a dynamoelectric rotary machine (21) with a rotational direction about a rotational axis (R) arranged in a layer centre (M) of the material layer (1), wherein the material layer (1) has a material recess (5) arranged substantially at the layer centre (M), wherein the material layer (1) has a first region (3), wherein the first region (3) has a first material with a first degree of strength, wherein the material layer (1) has a substantially annular second region (2) arranged concentrically to the layer centre, wherein the second region (2) has a second material with a second degree of strength higher than the first degree of strength, wherein the first material and the second material are connected with a material bond,
wherein an outer circumference of the second region (2) fully adjoins an inner circumference of the first region (3)

6. Material layer (1) according to claim 5, wherein the second material has a tensile strength of at least 800 MPa, preferably at least 1000 MPa.

7. Material layer (1) according to one of claims 5 or 6, wherein the first material has a first magnetic permeability, in particular µr > 50, and the second material has a second magnetic permeability lower than the first magnetic permeability, in particular µr < 5.

8. Material layer (1) according to one of claims 5 to 7 with a layer thickness (d) of 0.5 to 500 µm.

9. Material layer (1) according to one of claims 5 to 8, wherein a transition from the first region (3) to the second region (2) is abrupt.

10. Material layer (1) according to claim 5, wherein the material layer (1) has an insulation material (7, 8) on at least one layer side, preferably on both layer sides.

11. Material layer (1) according to one of claims 5 to 10, wherein the material layer (1) can be consolidated with at least one further material layer (1).

12. Material layer (1) according to one of claims 5 to 11, wherein the material layer (1) has at least one third region (15), wherein the third region (15) has permanent magnetic material, wherein the permanent magnetic material is connected with a material bond to the first material and/or to the second material.

13. Material layer (1) according to one of claims 5 to 12, wherein the material layer (1) has at least one material recess (10) for the introduction of permanent magnetic material.

14. Material layer structure (20) for a rotor (22) of a dynamoelectric rotary machine (21) having a plurality of material layers (1) arranged one above the other according to one of claims 5 to 13, wherein the material layer structure (20) has a cylindrical material recess along the rotational axis for attachment to a shaft (24).

15. Material layer structure according to claim 14, wherein the plurality of material layers (1) are arranged such that the third regions having permanent magnetic material form permanent magnets that are staggered or inclined or axially parallel with respect to the rotational axis.

## Revendications

1. Procédé de production d'une couche (1) de matériau pour un rotor (22) d'une machine (21) tournante dynamo-électrique, ayant un sens de rotation autour d'un axe (R) de rotation disposé en un centre (M) de la couche (1) de matériau, dans lequel la couche (1) de matériau a un évidement (5) de matériau disposé sensiblement au centre (M) de la couche, dans lequel la couche (1) de matériau a une première partie (3), dans lequel la première partie (3) a un premier matériau ayant une première résistance, dans lequel la couche (1) de matériau a une deuxième partie (2) sensiblement annulaire, disposée concentriquement par rapport au centre de la couche, dans lequel la deuxième partie (2) a un deuxième matériau ayant une deuxième résistance plus grande que la première résistance, dans lequel le premier matériau et le deuxième matériau sont reliés à coopération de matière, dans lequel un pourtour extérieur de la deuxième partie (2) est complètement voisin d'un pourtour intérieur de la première partie (3)
comprenant les stades suivants :
- dépôt d'une première suspension, comportant au moins un liant et des particules solides, par un premier gabarit sur une surface de base pour l'obtention d'un premier corps à vert, dans lequel la première partie est reproduite par le premier gabarit,
- dépôt d'une deuxième suspension, comportant au moins un liant et des particules solides, par un deuxième gabarit sur une surface de base pour l'obtention d'un deuxième corps à vert, dans lequel la deuxième partie est reproduite par le deuxième gabarit,
- assemblage du premier corps à vert et du deuxième corps à vert,
- obtention d'une cohérence permanente, à coopération de matière des deux corps à vert et des particules solides par chauffage et/ou au moyen d'une compression, en particulier au moyen d'un frittage.

2. Procédé suivant la revendication 1, dans lequel les particules solides comprennent des particules métalliques.

3. Procédé suivant les revendications 1 ou 2, dans lequel les particules solides de la première suspension comprennent des particules ayant une première perméabilité et une première résistance, dans lequel les particules solides de la deuxième suspension comprennent des particules ayant une deuxième perméabilité plus petite que la première perméabilité et une résistance plus grande que la première résistance.

4. Procédé suivant les revendications 1 à 3, dans lequel on dépose un matériau (7,8) isolant sur la couche (1) de matériau, sur au moins une face de la couche, de préférence sur les deux faces de la couche.

5. Couche (1) de matériau, produite suivant l'une des revendications 1 à 4, pour un rotor (22) d'une machine (21) tournante dynamo-électrique, ayant un sens de rotation autour d'un axe (R) de rotation disposé en un centre (M) de la couche (1) de matériau, dans laquelle la couche (1) de matériau a un évidement (5) de matériau disposé au centre (M) de la couche, dans laquelle la couche (1) de matériau a une première partie (3), dans lequel la première partie (3) a un premier matériau ayant une première résistance, dans lequel la couche (1) de matériau a une deuxième partie (2) sensiblement annulaire disposée concentriquement par rapport au centre de la couche, dans lequel la deuxième partie (2) a un deuxième matériau ayant une deuxième résistance plus grande que la première résistance, dans lequel le premier matériau et le deuxième matériau sont reliés à coopération de matière, dans lequel un pourtour extérieur de la deuxième partie (2) est complètement voisin d'un pourtour intérieur de la première partie (3)

6. Couche (1) de matériau produite suivant la revendication 5, dans laquelle le deuxième matériau a une résistance à la traction d'au moins 800 MPa, de préférence d'au moins 1000 MPa.

7. Couche (1) de matériau suivant l'une des revendications 5 ou 6, dans laquelle le premier matériau a une première perméabilité magnétique, en particulier µr > 50, et le deuxième matériau a une deuxième perméabilité magnétique plus petite que la première perméabilité magnétique, en particulier µr < 5.

8. Couche (1) de matériau suivant l'une des revendications 5 à 7, ayant une épaisseur (d) de couche de 0,5 à 500 µm.

9. Couche (1) de matériau suivant l'une des revendications 5 à 8, dans laquelle une transition de la première partie (3) à la deuxième partie (2) est abrupte.

10. Couche (1) de matériau suivant la revendication 5, dans laquelle la couche (1) de matériau a un matériau (7,8) isolant sur au moins une face de la couche, de préférence sur les deux faces de la couche.

11. Couche (1) de matériau suivant l'une des revendications 5 à 10, dans laquelle la couche (1) de matériau peut être consolidée par au moins une autre couche (1) de matériau.

12. Couche (1) de matériau suivant l'une des revendications 5 à 11, dans laquelle la couche (1) de matériau a au moins une troisième partie (15), dans laquelle la troisième partie (15) a du matériau à magnétisme permanent, dans laquelle le matériau à magnétisme permanent est relié à coopération de matière au premier matériau et/ou au deuxième matériau.

13. Couche (1) de matériau suivant l'une des revendications 5 à 12, dans laquelle la couche (1) de matériau a au moins un évidement (10) de matériau pour l'introduction de matériau à magnétisme permanent.

14. Texture (20) de couches de matériau pour un rotor (22) d'une machine (21) tournante dynamo électrique, comportant une pluralité de couches (1) de matériau disposées les unes sur les autres, suivant l'une des revendications 5 à 13, dans laquelle la texture (20) de couche de matériau a un évidement de matériau cylindrique le long de l'axe de rotation pour la liaison à un arbre (24).

15. Texture de couches de matériau suivant la revendication 14, dans laquelle la pluralité de couches (1) de matériau est disposée de manière à ce que les troisièmes parties comportant du matériau à magnétisme permanent forment une réalisation échelonnée par rapport à l'axe de rotation, ou inclinée ou parallèle à l'axe.
